# EUROPEAN PATENT APPLICATION

(11) **EP 1 683 841 A1**
(43) Date of publication of application: **26.07.2006**
(21) Application number: 06250288.5
(22) Date of filing: 19.01.2006
(51) Int. Cl.: C09D 5/03, C08K 5/00, C08K 5/3445, C08K 5/3472, C09D 5/18

(54) **Intumescent powder compositions and coatings made therefrom**

(30) Priority: 20.01.2005 US 645128 P
(71) Applicant: Rohm and Haas Company, Philadelphia, PA 19106-2399 (US)
(72) Inventor: Surplice, Neil, West Midlands WS6 6HF (GB); Watts, James Edward, Warwickshire CV8 1AP (GB); Wursthorn, Karl R., Westfield, Vermont 05874 (US)
(74) Representative: Kent, Venetia Katherine

(57) **Abstract**

The present invention provides intumescent powder compositions and methods of using them, the compositions comprising one or more blowing agents that initiate blowing at a first initiation temperature, preferably tetrazoles, one or more phosphorous containing catalysts that act as a blowing agent at a second initiation temperature, one or more hydroxyl functional or epoxy functional thermosetting resin carbonifics, one or more heterocycle containing thermoplastic resin or (co)polymer carbonifics, and one or more low temperature curing agents, such as an imidazole, wherein the compositions initiate blowing at a first and a at second initiation temperature which temperatures differ from each other by 10°C or more and by up to 150°C. The compositions do not foam during cure and provide cured intumescent coatings on substrates, such as structural steel, exhibiting controlled foaming when exposed to fire.

In another embodiment, the present invention provides plastic, capstock or molding compounds comprising one or more moldable or shapeable (co)polymers or resins, preferably polypropylene, and intumescent compositions.

## Description

### FIELD OF THE INVENTION

The present invention relates to flame retardant powder compositions which can be used to form coatings, films, and plastics that intumesce upon exposure to heat or to flame. More particularly, the present invention relates to flame retardant powder compositions having a combination of foaming agents such that articles made from the compositions gradually form a consistent foam when they intumesce upon exposure to heat or flame.

### BACKGROUND OF THE INVENTION

Steel framework building construction has been the end use of much of the world's steel production. In the event of fires in such buildings, the temperature of unprotected steel framed buildings quickly increases to the point where the steel "softens", loses its rigidity and compromises the integrity of the structure. Over time, flexing of the structure causes paneling and cladding to break loose, thereby posing a significant hazard to people trying to evacuate the building and to fire fighters trying to contain the blaze before the building collapses. To overcome the softening problem, insulating the steel can, to a degree, increase the time taken to reach the point at which the structure becomes unstable. In keeping with this practice, various insulation ratings have used official tests, e.g. British Standard fire tests. For example, the majority of structural steel requires a one hour fire rating.

Three steel insulation systems remain in common usage: Mineral insulants, cementitious sprays and intumescent coatings. Mineral insulants have largely comprised asbestos, rock wool or silicate fiber sprays that give very soft, unattractive coatings that look like matted fur. Rockwool is layered 3 to 4 inches (90 to125 mm) thick and is then covered over with decorative board to give a very bulky construction. Such coatings can pose serious health and environmental hazards. Cementitious sprays result in very heavy, thick coatings which can crack and fall off and, in some instances, may hasten the collapse of a structure due to their heavy weight. Intumescent coatings form a thick highly insulative foam on the surface of the steel only. when exposed to heat or flame. Unlike the other options available, intumescent coatings take up virtually no space and add virtually no additional weight to the coated structure under normal conditions. Such coatings appear much like a decorative coating and intumesce when exposed to intense heat or flame. To "intumesce" means to swell and char, forming an insulative foam layer.

For some time, available intumescent coatings have comprised solvent borne coatings. More recently, aqueous systems have been developed. Liquid intumescent coatings have comprised a binder polymer, an intumescent component in three parts - a catalyst, a charring or carbonific agent and a blowing agent, and optionally, fillers, and additives. In the intumescent component, the catalyst decomposes to provide a source of acid, e.g. phosphoric acid, reactive with the charring agent; the charring agent, e.g. a polyhydric alcohol, such as (di)pentaerythritol, decomposes to form a carbonaceous char; and the blowing agent, such as melamine and urea, produces a non-flammable gas which serves to make the carbonaceous char foam when subject to heat or flame. In a fire, the intumescent component decomposes and intumesces, resulting in the formation of a non-flammable, insulating barrier. Liquid intumescent coatings currently comprise an important commercial product even though they are practicable only with great difficulty.

Intumescent liquid coatings are "soft" and therefore easily damaged. Further, most intumescent coatings require a primer coat and a finishing coat to improve weatherability, and they require several passes of intumescent material to build up the required thickness of material. In "off site" application of the coating, liquid intumescent systems have proven difficult and slow to apply as well as requiring significant repair once the structure is erected. Thus, intumescent coatings have preferably been applied "on site" to the finished structure after the steel structure has been built. Even in "on site" applications, the wet coating must dry for two days and is easily damaged, once dry, thereby resulting in significant touch up application on site.

In WO 02/077110 A1, the Applicant discloses an intumescent powder coating composition which comprises a phosphorous containing material, a hydroxylated thermosetting resin binder, an oxygenated heterocyclic thermoplastic binder and a curing agent, such that the thermoplastic and thermosetting binder impart charring and blowing functions to the coating. The resulting powder composition intumesces at an unpredictable rate upon exposure to heat or flame, forming a foam which has an unpredictable foam cell size and which is unstable and prone to collapse. Further, the powder compositions remained highly viscous during heating and rose less on foaming than liquid compositions applied at the same coating thickness. A powder coating layer of the resulting composition of about 4 mm(4,000 microns) in thickness protected the coated substrate so that it could pass a 60 minute British Standard fire test.

In accordance with the present invention, the present inventors have endeavored to provide a flame retardant, intumescent powder composition which provides durable coatings, films and plastics that intumesce to provide a consistent foam insulation which avoids the drawbacks of the previous intumescent liquid and powder compositions.

### SUMMARY OF THE INVENTION

The present invention provides intumescent powder compositions comprising one or more blowing agents that initiate blowing at a first initiation temperature, one or more phosphorous containing catalysts, one or more hydroxyl functional or epoxy functional thermosetting resin carbonifics, one or more oxygen- or nitrogen-heterocycle containing thermoplastic resin or (co)polymer carbonifics, and one or more curing agents, wherein the composition initiates blowing at a second initiation temperature, such that the first initiation temperature and the second initiation temperature differ from each other by 10°C or more and by up to 150°C. The composition does not foam during cure and any coating formed thereby does not foam until it is exposed to flame, fire or heat above the first initiation temperature. Accordingly, the curing agent comprises one or more low temperature curing agents, such as an imidazole, an epoxy resin adduct of an imidazole, or an epoxy resin adduct of a polyamine, such as an aliphatic, cycloaliphatic or aromatic polyamine. Preferably, the curing agent comprises 2-methyl imidazole.

The one or more blowing agents initiating at the first initiation temperature preferably comprises tetrazoles of the formula, 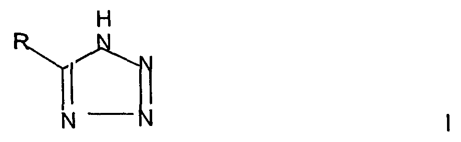 wherein R represents a monovalent organic radical chosen from C₃ to C₁₂ alkyl, aminoalkyl or diaminoalkyl, and C₆ to C₁₈ aryl, alkylaryl, aminoalkylaryl and diaminoalkylaryl. More preferably, the tetrazole comprises an aromatic group-substituted tetrazole, such as 5-phenyl tetrazole.

The one or more phosphorous containing catalysts act as a spumific or blowing agent at the second initiation temperature, and preferably comprises ammonium polyphosphate, melamine phosphate, urea phosphate, or mixtures thereof, most preferably ammonium polyphosphate.

In another embodiment of the present invention, the powder composition additionally comprises one or more polyhydric alcohol carbonifics, preferably trimethylolpropane (TMP).

In yet another embodiment, plastic or molding compounds comprise one or more moldable or shapeable (co)polymers or resins, preferably polyolefins, such as polypropylene, and an intumescent composition of one or more phosphorous containing catalysts, one or more oxygen-heterocycle containing thermoplastic resin or (co)polymer carbonifics, and one or more blowing agents that initiate blowing at a first initiation temperature, wherein the composition initiates blowing at a second initiation temperature such that the first initiation temperature and the second initiation temperature differ from each other by 10°C or more, and by up to 150°C. Such compounds may be used as a flame retardant capstock.

In yet still another embodiment, the present invention provides methods of forming coatings, films or shaped articles, wherein the powder composition is cured at approximately 160°C, after application as a coating, or formation of a film or admixing into and shaping of a thermoset matrix, so that the blowing agents are not activated during cure. There is no foaming during cure and the coating does not foam until it is exposed to flame or fire.

The present invention additionally provides coatings of the cured intumescent composition on substrates, such as structural steel.

### DETAILED DESCRIPTION OF THE INVENTION

(Co)polymer or resin containing intumescent compositions in which the blowing initiation or foaming temperature exceeds the (co)polymer or resin cure or setting temperature can be coated onto substrates or shaped or formed into articles and films of any shape and then cured, without foaming the compositions. The thermosetting resin cures to make a durable coating, film, or shaped article and the thermoplastic resin is chemically inert during cure.

Fueled by fire, formation and expansion of the char can be an uncontrolled, violent reaction. Burning or heating above 250°Cquickly activates the tetrazole, giving an initial expansion of the coating, film or shaped material. Continued heating activates the phosphorus containing catalyst which liberates free acid, e.g. phosphoric acids, that react with hydroxyl, acetal, ketal, free radical oxygen, or epoxide groups on the thermosetting resin backbone and the oxygen- or nitrogen- heterocycle containing thermoplastic resin to give phosphate esters that have resistance to high temperatures. Meanwhile, the thermoplastic resins soften or melt and create a flexible mass to entrap gases that may form therein and thereby form a foam. In addition, during burning or heating above the blowing initiation temperature, the coating or article becomes plastic and the composition pyrolyzes to liberate gases that expand the film or article. Further, as the heat intensifies, the phosphate ester decomposes to phosphoric acid, steam, carbon dioxide, and a carbonaceous char. The steam and carbon dioxide gases further expand the mass, and the thermoplastic resin allows flexibility to enable the char to expand. When the char is expanded gradually, it will be less likely to burst or collapse, resulting in a thicker, more insulative layer containing a larger number of cells.

The present inventors have found that intumescent compositions comprising one or more of each of blowing agents which initiate blowing at temperatures differing from each other by at least 10°C and by up to 150°C will provide surprisingly thick insulative layers upon burning. Further, when the intumescent compositions comprise one or more blowing agents that initiate blowing at the lowest possible temperatures so that blowing does not occur upon cure, an evenly expanded, surprisingly uniform foam results. Still further, at sufficiently high temperatures, the phosphoric esters form to release carbon dioxide gas and steam and can also decompose to release other nonflammable gases, such as ammonia. Those gases released by the formation of phosphoric esters and by their decomposition by products act to further blow the carbonaceous char foam into an even thicker insulating foam protecting the substrate. Preferably, the insulative layer resulting from a 1 mm thick intumescent powder coating, capstock or film expands to at least a 40 mm thick insulating foam during exposure, a 40-fold increase in thickness.

All ranges recited are inclusive and combinable. For example, an average particle size of 1.3 µm or more, for example, 1.5 µm or more, which may be 4.5 µm or less, or 4.0 µm or less, will include ranges of 1.3 µm or more to 4.5 µm or less, 1.5 µm or more to 4.5 µm or less, 1.5 µm or more to 4.3 µm or less, and 1.3 µm or more to 4.3 µm or less.

Unless otherwise indicated, all temperature and pressure units are standard temperature and pressure (STP).

All phrases comprising parenthesis denote either or both of the included parenthetical matter and its absence. For example, the phrase "(co)polymer" includes, in the alternative, polymer, copolymer and mixtures thereof.

As used herein, the phrase "average particle size", refers to the particle diameter or the largest dimension of a particle in a distribution of particles as determined by laser light scattering using a Malvern Mastersizer® 2000 a product of Malvern Instruments Inc. of Southboro, MA, per manufacturer's recommended procedures, such that 50 wt.% of the particles in the distribution are smaller than the particle and 50 wt.% of the particles in the distribution are larger than the particle. The term "D50" refers to an average particle size.

As used herein, the phrase "coating powder" refers to a powder coating composition and the phrase "powder coating" refers to a coating formed from a powder coating composition.

As used herein, unless otherwise indicated, the phrase "copolymer" includes, independently, copolymers, terpolymers, block copolymers, segmented copolymers, graft copolymers, and any mixture or combination thereof.

As used herein, the phrase "D50" refers to a percentile average particle size taken from a particle sample or mixture, such that exactly 50 wt.% of the mixture has a smaller particle size than a particle of D50 size. For example, D97 refers to the particle size of a particle which has a larger diameter or largest dimension than 97 wt.% of a particle sample.

As used herein, the phrase "intumescent" capable of swelling and charring when exposed to flame or intense heat and of forming an insulating fire-retardant barrier between the flame or heat and the protected material.

As used herein, unless otherwise indicated, the phrase "low temperature cure" or "low temperature curing" refers to (co)polymers and resins, curing agents or their mixtures that cure at temperatures at least 10°C, preferably at least 15°C above the T_{g} the (co)polymer or resin in the raw mix and below 177°C, preferably, below 150°C, and more preferably below 125°C.

As used herein, unless otherwise indicated, the phrase "melt viscosity" refers to the melt viscosity of a polymer or resin, as measured in centipoises at 150°C using a Brookfield Viscometer in accordance with the manufacturer or equipment supplier's recommendations.

As used herein, the term "(meth)acrylate" means acrylate, methacrylate, and mixtures thereof and the term "(meth)acrylic" used herein means acrylic, methacrylic, and mixtures thereof.

As used herein, unless otherwise indicated, the phrase "molecular weight" refers to the weight average molecular weight of a polymer as measured by gel permeation chromatography.

As used herein, the term "polyamine" refers to any one or more diamines, triamines, tetramines, pentamines or amine functional polymers

As used herein, the glass transition temperature (T_{g}) of any polymer may be calculated as described by Fox in *Bull. Amer. Physics. Soc.,* 1, 3, page 123 (1956). The Tg can also be measured experimentally using differential scanning calorimetry (rate of heating 20°C. per minute, Tg taken at the midpoint of the inflection). Unless otherwise indicated, the stated Tg as used herein refers to the calculated Tg.

As used herein, the phrase "wt.%" stands for weight percent.

Blowing Agents which initiate blowing at the first blowing temperature do not blow while the intumescent composition is cured or molded, for example at from 150 to 160°C. Such blowing agents can be any which initiate blowing at from 200 to 250°C. These blowing agents help develop a heat insulating foam early on in a fire situation, thus reducing the rate of substrate or steel temperature increase. Suitable blowing agents decompose in the presence of sufficient heat to form gases such as oxygen, nitrogen, carbon dioxide, and ammonia gas, or mixtures thereof, preferably nitrogen gas (N₂) and/or carbon dioxide. Suitable blowing agents may comprise azo, carbazide and tetrazole compounds, such as azodicarbonamides, toluene sulfonyl hydrazide, (para)toluene sulfonyl semicarbazide, tetrazoles, and substituted tetrazoles of the formula I: 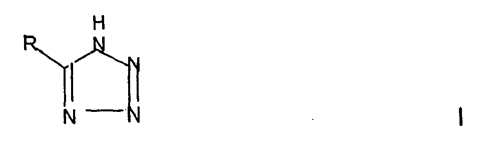 wherein R represents a monovalent organic radical chosen from C₃ to C₁₂ alkyl, aminoalkyl or diaminoalkyl, and C₆ to C₁₈ aryl, alkylaryl, aminoalkylaryl and diaminoalkylaryl. Preferably, R represents C₆ to C₁₈ aryl or alkylaryl, more preferably, benzyl or phenyl. Preferred such blowing agents comprise aryl substituted tetrazoles, or more preferably, 5-phenyl tetrazole.

Total amounts of one or more blowing agents which initiate blowing at the first blowing temperature may range as low as 0.1 wt.% or more, based on the total weight of the intumescent composition, or 0.3 wt.% or more, or 0.5 wt. or more, and up to 3 wt.%, or up to 2 wt.%, or up to 1 wt.%. Excessive amounts of such blowing agents will blow the coating, film or protective portion of a shaped article off of the protected surface, e.g. metal, and can cause coating or film slump. Use of too little of such blowing agents prevents controlled foaming.

Suitable commercially available blowing agents which initiate blowing at the first blowing temperature comprise Expandex 5PT (Uniroyal Chemical Co. Inc, Middlebury, Connecticut, 08749, USA), a 5-phenyl tetrazole. 5-phenyl tetrazole initiates blowing at from 220 to 240ºC. Other suitable blowing agents are sold under the name CELOGEN^{™} (Uniroyal Chemical Co., Danbury, CT) that include toluene sulfonyl semicarbazide, and azodicarbonamide.

The blowing agent initiating at the second initiation temperature comprises the phosphorous containing catalyst and causes blowing at from 250-350°C. Under increasing temperature, the phosphorous containing catalyst liberates phosphoric acid to react with hetero-O, epoxy, or hydroxyl groups, or other reactive oxygen containing groups on either the thermosetting or the thermoplastic resin to form organic phosphate esters. This provides the mass or body that blowing gases can expand. At the same time, the formation of such organic phosphate esters liberates carbon dioxide and steam (water), thereby causing blowing and foaming. Total amounts of the one or more phosphorous containing catalysts may range as low as 5 wt.% or more, based on the total weight of the intumescent composition, or 10 wt.% or more, or 30 wt.% or more. To insure that sufficient resin is present to form a coating, film or article, total amounts of the one or more phosphorous containing catalysts may range-as high as 60 wt.%, or 40 wt.%.

Suitable phosphorous containing catalysts comprise alkali(ne) phosphates, such as potassium phosphate, zinc phosphate, ammonium polyphosphate, melamine phosphate, urea phosphate, any phosphorous containing catalysts mixed with melamine, any phosphorous containing catalysts mixed with urea, and mixtures of phosphorous containing catalysts. Urea and melamine act as blowing agents which release N₂ at the second initiation temperature.

Preferably, phosphorous containing catalysts comprise ammonium polyphosphate and/or melamine phosphate. Melamine phosphate reacts at a higher temperature than ammonium polyphosphate and stops the coating, film or article from 'slumping' during the initial foaming. However, melamine phosphate can make a coating powder difficult to apply and can restrict foaming. Accordingly, melamine phosphate should be used in amounts of up to 30 wt.%, based on the total weight of the intumescent composition, or up to 20 wt.%. Suitable commercially available phosphorous containing catalysts comprise EXOLIT^{™} 422 (Hoechst AG, Frankfurt, DE), an ammonium polyphosphate, and MELAPUR^{™} MP (Chemie Linz GmbH, Linz, Austria), a melamine phosphate.

The one or more thermosetting resins act as carbonific char promoters by reacting with the one or more phosphorus containing catalysts to form organic phosphates. Such thermosetting resins may comprise any hydroxyl functional or epoxy functional resins, such as aromatic epoxy resins, nolovac/resole resins and phenoplasts having a T_{g} or 40°C or higher, preferably 50°C or higher. Preferable thermosetting resins comprise epoxy resins. Suitable preferred thermosetting resins may comprise bisphenol epoxy resins having an average epoxide equivalent weight (EEW) of 800 or higher, or 1600 or higher and up to 3000, or up to 2000, for example, type 4, 5, 6 and 7 bisphenol epoxy resins. More preferably, thermosetting resins comprise partial fatty esters of polyglycidyl ethers of bisphenol A having an average EEW of from 1600 to 1900 or partial fatty esters of polyglycidyl ethers of mixtures of bisphenol A with bisphenol F having an average EEW of from 1600 to 1900. Such more preferred resins are highly durable and highly viscous and provide slump resistant coatings and films, and low reactivity so that it gives a low cross link density to facilitate foaming). One example of a more preferred thermosetting resin comprises DER 6670 Type 7, a high molecular weight solid bisphenol epoxy resin having an average EEW of from 1600 to 2000 and viscosity @ 150C of 30,000-100,000 centistokes from (DOW Chemical Company, Bachtobelstrasse 3, CH-8810 Horgen, Switzerland).

In another embodiment, the thermosetting resin comprises a mixture of from 30 to 70 wt.% of an epoxy resin having an average EEW of from 800 to 2000, based on the total weight of thermosetting resins, with from 70 to 30 wt.% of a crystalline epoxy resin or an epoxy resin having an average EEW of from 100 to 400 to reduce melt viscosity. Such a mixture may improving ease of coating or film formation and enable increased loading of non-resinous or inorganic ingredients, e.g. phosphorus containing catalysts, blowing agents and fillers, into the compositions.

The total amounts of the one or more thermosetting resins may range as low as 15 wt.%, based on the total weight of the intumescent composition, or as low as 27 wt.%, and may range as high as 35 wt.%, or as high as 30 wt.%. If less than 15 wt.% of the total intumescent composition comprises one or more thermosetting resins, the resulting coating, or film formed by the composition will drip upon exposure to flame and the resin will not hold the intumescent foam together. If more than 35 wt.% of the total intumescent composition comprises one or more thermosetting resins, the resulting coating, or film will not be sufficiently plastic to foam when exposed to intense heat or flame, causing the foam to crack.

The one or more thermoplastic resins that act as carbonific char promoters by reacting with the one or more phosphorus containing catalysts to form organic phosphates may comprise an oxygen- or nitrogen-heterocycle containing thermoplastic resin having a T_{g} or 40°C or higher, or 45°C or higher, or, preferably, 50°C or higher. Such resins enable film formation and plasticity in the composition so that it can be shaped and provide plasticity in the char to enable it to foam and expand. Suitable thermoplastic resins may comprise cellulosics, such as cellulose esters and ethers, for example, cellulose acetate butyrate (CAB), poly(orthoesters), aliphatic polycarbonates, poly(dioxanones), ketone resins, aldehyde resins and ketone-aldehyde resins. Preferably, such resins comprise hydroxyl functional ketone resins, aldehyde resins and ketone-aldehyde resins.

Suitable ketone resins may comprise condensates of cycloaliphatic ketones, e.g. of cyclohexanone or its derivatives, such as methylcyclohexanone and p-tert.-butylcyclohexanone. These ketone resins can be obtained in a conventional manner by alkali-catalyzed self-condensates of the cycloaliphatic ketones, or mixtures of these, or by alkali-catalyzed condensation, e.g. with urea.

Suitable ketone-aldehyde resins may comprise condensates of ketones and aliphatic aldehydes, preferably, condensates of cycloaliphatic ketones e.g. cyclohexanone and its derivatives, such as methylcyclohexanone, with aldehydes, preferably formaldehyde or its oligomers, e.g. paraformaldehyde. These ketone-aldehyde resins can be prepared in a conventional manner by condensation in the presence of an alkaline catalyst.

Most preferably, the thermoplastic resin comprises a hydroxyl functional N-heterocyclic urea-aliphatic aldehyde resin, such as LAROPAL^{™} A81 (BASF AG, Ludwigshafen, DE). Suitable condensates of urea and CH-acidic aldehydes may comprise the condensates of urea with isobutyraldehyde, n-butyraldehyde, 2-methylpentanal, 2-ethylhexanal and/or 2-phenylpropanal, if desired in combination with formaldehyde. These resins can be obtained, for example, by the method described in European Patent Nos. 2,793 or 2,794, from urea or substituted ureas and CH-acidic aldehydes, such as isobutyraldehyde, in combination with formaldehyde, by acid-catalyzed condensation.

The total amounts of the one or more thermoplastic resins may range as low as 5 wt.%, based on the total weight of the intumescent composition, or as low as 10 wt.%, and may range as high as 25 wt.%, or as high as 15 wt.%, or as high as 13 wt.%. If less than 5 wt.% of the total intumescent composition comprises one or more thermoplastic resins, the resulting coating or film formed by the composition will lack adequate plasticity hold the intumescent char together as it foams and expands. If more than 25 wt.% of the total intumescent composition comprises one or more thermoplastic resins, the resulting coating or film will drip and sag in response to heat.

In general, the combination of the one or more thermoplastic resins and the one or more thermoset resins should comprise 40 wt.% based on the total weight of the intumescent composition to retain sufficient flow properties make a film, coating or shaped article, and may comprise up to 60 wt.% based on the total weight of the intumescent composition, so that the intumescent composition retains sufficient phosphorus containing catalyst and blowing agent to enable the composition to cure, and then foam and expand when exposed to a sufficiently high temperature or to flame.

Suitable curing agents for the one or more thermosetting resins may comprise any that are active at temperatures of 160°C or less. Such curing agents may be chosen from epoxy adducts of an imidazole, epoxy adducts of an aliphatic polyamine, imidazoles, such as 2-methyl imidazole (2-MI), alkyl imidazoles, aryl or phenyl imidazoles, and cationic cure catalysts, such as onium compounds like ethyltriphenyl phosphonium halides, and phosphines.

Suitable amounts of such curing agents will vary depending on the curing agent used. In general, greater amounts of curing agents may be used in two-component powder compositions wherein the first component comprises an extrudate or intimate mix of the one or more thermosetting resins and the second component comprises finely ground curing agent, optionally extruded or intimately mixed with any ingredients aside from the one or more thermosetting resins. Imidazoles and their adducts may be used in total amounts of 0.5 wt.% or more, based on the total weight of the intumescent composition, or 0.75 wt.% or more, or 2 wt.% or more, or 2.5 wt.% or more, and may be used in total amounts of 6 wt.% or less, based on the total weight of the intumescent composition, or 5 wt.% or less, or 2.5 wt.% or less. Epoxy Adducts of an aliphatic polyamine may be used in total amounts of 2 wt.% or more, based on the total weight of the intumescent composition, or 4 wt.% or more, or 5 wt.% or more, and may be used in amounts of 40 wt.% or less, or 25 wt.% or less, or 20 wt.% or less or 12 wt.% or less, or 8 wt.% or less. The one or more cationic curing agents may be used in total amounts of 0.1 wt.% or more, based on the total weight of the intumescent composition, or 0.5 wt.% or more, and may be used in total amounts of up to 2 wt.%, based on the total weight of the intumescent composition, or up to 1 wt.%.

The one or more optional carbonific additives, which can act as hydroxyl donors and char promoters, may comprise any polyhydric alcohols, such as (di)pentaerythritol or trimethylol ethane (TME), or OH containing waxes that have a T_{g} of 40°C or more, and, preferably 45°C or more. Most preferably, the carbonific additive comprises trimethylolpropane (TMP), a waxy solid. TMP helps lower the melt viscosity during extrusion and improves the foam quality, e.g. uniformity and cell density, during intumescence. Suitable total amounts of the one or more optional carbonific additives may range from 2 wt.% or more, based on the total weight of the intumescent composition, or 2.5 wt.% or more and up to 8.0 wt.%, or up to 6.0 wt.%.

Suitable pigments useful in the composition may comprise one or more pigments, for example, titanium dioxide, metal oxides, such as ferric oxides, micas, coated micas, and metallic pigments, such as leafing and non-leafing metallic flake. Titania and mica are inert inorganic products with melting points above 1000°C, and they give strength to the char foam of the compositions. In one embodiment, mica comprises a majority of the one or more pigments to provide extra structure support in the char foam. The total amounts of the one or more pigments may range up to 6.0 wt.%, based on the total weight of the intumescent composition, or up to 5 wt.%.

One or more vitrifying agents may be added to the composition to both increase hardness of the foam and protect the foam at high temperatures. Vitrifying agents may comprise zinc borate, mixed metal containing glass frits, for example CEEPREE^{™} (Ceepree Products, Ltd., Southport, England), calcium borate, other silicates or borates, low melting glasses that would act as binder at less than 400° C, e.g. alkali(ne) metal containing glasses, and mixtures thereof .The total amounts of the one or more vitrifying agents may range up to 10.0 wt.%, based on the total weight of the intumescent composition, or up to 4.0 wt.%, or up to 2 wt.%.

Suitable additives for the compositions may comprise flow aids, such as (meth)acrylic ester copolymers, in amounts of up to 10 wt.%, based on the total weight of the intumescent composition, dry flow aids, such as fume silica, in amounts of up to 1.0 wt.%, based on the total weight of the intumescent composition, anti-gassing agents, such as benzoin, in amounts of up to 1.0 wt.%, based on the total weight of the intumescent composition, antioxidants in amounts of up to 1.0 wt.%, based on the total weight of the intumescent composition, and mold release agents in amounts of up to 2.5 wt.%, based on the total weight of the intumescent composition.

The intumescent compositions can be made by intimately mixing the ingredients, e.g. by melt mixing, spray drying of dispersions comprising the ingredients, supercritical fluid processing, or agglomeration, followed, if necessary, by cooling, drying, grinding or any combination thereof to make a powder. Preferably, the compositions are extruded, then cooled or solidified, and then ground. In making a "one-component" composition, all ingredients are added to an extruder or mixing vessel and are mixed in a single run. "Two-component" extruded compositions result from separately extruding or intimately mixing the thermosetting resin or (co)polymer without the curing agent, in one component, and dry grinding or intimately mixing the curing agent in a second component, with the remaining ingredients apportioned in either or both components. In extrusion, all of the ingredients are mixed in the extruder, preferably adding either the thermoplastic or thermosetting resin carbonifics to the extruder first to create a fluid melt mixing medium. Preferably, the temperature of the extrudate ranges from 100 to 140°C.

Extrudate or melt mixed intumescent compositions should be ground to powders having an average particle size (D50) of up to 200µm, or up to 100 µm, and with a minimal amount, e.g. less than 5 wt.%, finer than 10 µm. Powder compositions having an average particle size (D50) of up to 80µm, or of up to 35µm, or of up to 25µm may be particularly useful for coating heat sensitive substrates. Spray dried intumescent powder products should have the same average particle size as extruded or melt-mixed powder compositions.

In an alternative embodiment, intumescent coating or film-forming compositions can comprise solvated liquid compositions that can be applied by electrostatic spray or formed by film evaporation. Such compositions may comprise two-component thermosetting resins, such as polyisocyanates and polyols, wherein the components are kept in two separate containers and are mixed during or just before application. Suitable solvents may comprise any of xylene, alkanols and ketones, preferably a mixture of xylene, butanol and methyl isobutyl ketone (MIBK). Such liquid compositions should comprise from 30 to 60 wt.% total solids, or 40 to 50 wt.% total solids. Further, such liquid compositions may comprise metallic pigments, such as aluminum powder or flake, in the amount of up to 6 wt.%, based on the total weight of the solids. Metallic pigment containing liquid coatings may be used to make insulative coatings for metal aircraft parts and whole aircraft fuselages, e.g. cargo bays and passenger compartments. Such compositions may be made by stirring all ingredients in a low shear mixer.

In another embodiment, moldable and shapeable compositions of the present invention, may comprise flame retardant, melt-blendable plastics additive or capstock compositions which are added to plastics, such as polypropylene (PP), high density polyethylene (HDPE) or polyvinyl chloride (PVC). Such compositions comprise one or more one or more phosphorous containing catalysts, as described above, one or more oxygen-heterocycle containing thermoplastic resin or (co)polymer carbonifics, as described above, and one or more blowing agents that initiate blowing at a first initiation temperature, as described above. The one or more thermoplastic resin carbonifics make the product melt blendable with many host materials.

The ingredients that are preferred for use in the film or coating compositions are also preferred for use in the melt-blendable plastics additive or capstock compositions for making molded or shaped articles. However, the melt-blendable plastics additive or capstock compositions should comprise one or more thermoplastic resin carbonifics in the total amount of 30 wt.% or more, based on the total weight of the intumescent composition, or 35% or more, and should be used in amounts of 60 wt.% or less, or 40 wt.% or less. The use of higher molecular weight thermoplastic carbonifics, e.g. those having molecular weights of 30,000 or more, preferably 60,000 or more, and up to 500,000, will avoid dripping or sagging on exposure to flame or heat sufficient to cause blowing. Such compositions should be added to and mixed with plastics in the amount of from 10 to 30 wt.%, based on the total weight of the intumescent composition and the plastic.

In use, flame retardant "masterbatches" may be prepared by extruding together the one or more phosphorous containing catalysts, one or more oxygen-heterocycle containing thermoplastic resin or (co)polymer carbonifics, and one or more blowing agents that initiate blowing at a first initiation temperature. The masterbatch may then be co-extruded or compounded with a thermoformable plastic or resin to make the molding or shapeable composition.

In yet still another embodiment, the present invention provides methods of forming coatings, films or shaped articles, wherein the powder composition is applied to a substrate or is formed into a film or a shaped article, and, in the case of coatings and films, is cured at 180°C or less, or 150°C or less, and as low as 90°C or more.

Coatings may be applied, for example, by electrostatic spray, fluidized bed, or magnetic brush powder coating, or they may be slurried in water and sprayed on substrates. Films may be formed, for example, by extrusion onto a releasable surface and cooling, by thin film evaporation, or by equivalent means. Shaped articles may be made, for example, by injection molding, blow molding, or shaped by extrusion and, if necessary, cutting.

Any necessary curing may be continued at the desired cure temperature for 30 seconds or longer, or 10 minutes or longer, or 20 minutes or longer, and up to 90 minutes, or up to 60 minutes, or up to 30 minutes. Desirable means of cure may include thermal convection and, for rapid cure in 30 seconds to 5 minutes, infrared (IR) with convection, or any means of heating the compositions as long as the surface temperature of the film, coating or article does not exceed the cure temperature.

No matter how the compositions are cured, the blowing agents are not activated during cure or by application as a coating, formation of a film, or admixing into a plastic matrix. There is no foaming during cure and the coating does not foam until it is exposed to flame, fire or heat which is above at least the first blowing initiation temperature.

Suitable coating,'film or capstock thicknesses may vary depending on the amount of insulation desired upon intumescing. Suitable thicknesses of coatings or films may range as low as0.4 mm, or 0.8mm, or 1.6mm, and may be as thick as 10mm, or as thick as 4 mm. Capstocks may be as much as ten times thicker and as little as three times thicker than coatings or films to give comparable insulative properties, and can thus be as thick as 3 cm, or as thin as 1.2 mm.

The compositions may be coated on steel, aluminum or titanium, wood, plastic and other heat sensitive substrates, such as plywood, fiberboard, e.g. medium density fiberboard (MDF), masonite, composite board and cardboard. Suitable coating applications include structural steel, wood construction materials, and aluminum or titanium aircraft parts.

Fire Test: The powder coatings made according to the following examples were tested according to BS 476:part20, published 1987 (BS 476:20 1987). In the test procedure, coated steel parts are fitted with NiCr/NiAl thermocouples comprising wire contained within mineral insulation contained within a porcelain insulator sleeve surrounding so that the wire projects 25 from the sleeve. The thermocouples are peened to the metal substrates, inserting them into holes previously drilled to a diameter only slightly larger than the thermocouple, followed by burring over the edge of the hole with a punch to retain the thermocouple into position. The coated steel parts are then placed into a gas furnace at a distance of from 30 to 35 cm from the radiant heat source, i.e. the walls, of the furnace and the temperature in the furnace is raised to 1000°C at a rate conforming to the Standard Temperature and Time Curve (BS 476:20 1987, figure 2, page 33).

The furnace temperature is measured with a NiCr/NiAl wire junction contained within mineral insulation and having a steel sheath having a diameter of 1.5 mm. The measuring junctions are placed at average distance of 100mm ± 10 mm from the coated steel parts. The average temperature of the coated steel parts, as reported by the thermocouples, is measured and the amount of time taken for the average temperature of the coated steel part to reach 550°C is noted. The test ends when the thermocouples report an average temperature of 550°C.

The "average temperature" of a coated steel I-beam substrate is determined by averaging the flange temperatures reported by each of the thermocouples peened to the flange top and the flange bottom, followed by averaging the resulting average flange temperature with the temperature reported by of the thermocouple peened to center of the web of the coated steel part.

Coatings are rated according to the amount of time taken for the average temperature of the coated steel part to reach 550°C, such that a coating that keeps the part below 550°C for one half hour is given a 30 minute rating; a coating that keeps the metal below 550°C for one hour is given a 60 minute rating; and so on up to the highest rating, a "two hour" rating.

Coating thickness: The overall film thickness of a coating before a fire test is checked by weighing the steel part before coating and after coating and curing.

Foam Expansion: The degree to which the powder coating film expands during the fire test is measured relative to the original thickness of the coating with a film thickness gauge that works on a magnetic principle, so that thicker foamed films exhibit a weaker magnetic field. Following the fire test and after the parts have been allowed to cool to room temperature, the foam thickness is again measured with a ruler.

As used herein, the term "full scale furnace" refers to a gas furnace having four (4) measurement junctions and three (3) burners. The gas velocity rate in this furnace is controlled manually by an operator observing the heat up rate and adjusting the gas rate electronically, as necessary, to insure that the heat up rate follows the Standard Temperature and Time Curve (BS 476-20:1987 at page 33).

As used herein, the term "lab scale furnace" refers to a gas furnace having five (5) measurement junctions and two (2) burners. The gas velocity rate in this furnace is computer controlled to insure that the heat up rate follows the Standard Temperature and Time Curve (BS 476-20:1987 at page 33).

Steel I-beam substrates are classified by measurement of their section factor (Hp/A) values, defined as the ratio of the perimeter of the heated steel I-beam (Hp) divided by its cross sectional area (A). Steel structures having high Hp/A figures have a high surface area and low mass, will heat quickly, and are the most difficult to protect. When referring to an 'I' beam, the "web" is the central spine and each of the two end portions is referred to as a "flange".

### EXAMPLES

Construction steel 'I' beams, having a given Hp/A and having a profile like the letter 'H' were preheated in a convection oven for 30 mins @ 150°C, and then the powder coatings specified in each example were electrostatically applied to each beam via a spray gun. Following the application of the coating powder, the coated beams were allowed to sit for 15 minutes cooling in ambient air, and then the coatings were cured in a convection oven for 60 minutes @ 150°C oven air temperature, to give the coated substrates to be tested.

### Examples 1A and 1 B

The formulations used in Examples 1A and 1B are given in TABLE 1, below. In Example 1A, steel I-Beam substrates 0.8 meter in length, having an Hp/A of 180, and weighing 40 kg were coated with the formulation in TABLE 1 to give a coating 2.5 mm thick. In Example 1B, steel I-Beam substrates 0.8 meter in length, having an Hp/A of 300 and weighing 40 kg were coated with the formulation in TABLE 1 to give a coating of 3.1 mm thick. In Examples 1A and 1 B, the resulting coatings were smooth, semi gloss films.

Fire test and coating thickness results for each of Examples 1A and 1 B were conducted in a single full scale furnace in which two coated steel I-beams were placed. Results are reported in TABLE 3, below. After the fire test, the surface of the coatings in Examples 1A and 1B is uneven and is carbonised black. Cutting a section through the expanded film shows that there are various size foam cells mostly ranging between 5mm and 20 mm, giving the appearance of a sponge.

**TABLE 1**

| **Ingredient** | **Amount (wt. parts)** |
|---|---|
| Type 7 Epoxy, partly esterified | 300 |
| 2- Methyl imidazole (2-MI) | 8.5 |
| Ammonium polyphosphate | 275 |
| Melamine phosphate | 125 |
| N-heterocyclic urea aldehyde resin | 116.5 |
| 5-Phenyl tetrazole | 5 |
| Trimethylol Propane (TMP) | 50 |
| Zinc Borate | 20 |
| Titanium Dioxide | 50 |
| Mica (finely divided - 300 mesh) | 50 |
| **Total** | 1000 |

### Comparative Examples 2A and 2B

In Comparative Example 2A, uncoated steel I-Beams 0.3 meters in length, weighing 20 kg and having an Hp/A rating of 300 were placed in a lab scale furnace and tested. In Comparative Example 2B, the formulation given in TABLE 2 was coated onto steel I-Beams 0.3 meters in length, weighing 20 kg and having an Hp/A rating of 300to a thickness of 2.5 mm.

In Comparative Examples 2A and 2B, four of the I-Beam substrates were fire tested in a single lab scale furnace. After the fire test, the surface of the coating in Comparative Example 2B is uneven and is carbonised black. Cutting a section through the expanded film shows that the expanded film comprises cells mostly between 5mm and 25mm. Fire test and coating thickness results for each of Comparative Examples 2A and 2B are reported in TABLE 3, below.

**TABLE 2**

| **Ingredient** | **Amount (wt. parts)** |
|---|---|
| Type 3 linear epoxy | 187.5 |
| Phenolic Novolac curing agent (Hydroxyl Equivalent Wt. of from 235 to 265)¹ | 62.5 |
| Ammonium polyphosphate | 200 |
| Melamine phosphate | 200 |
| N-heterocyclic urea aldehyde resin | 185 |
| Azodicarbonamide | 25 |
| Trimethylol Propane (TMP) | 25 |
| Zinc Borate, | 15 |
| Titanium Dioxide | 50 |
| Mica | 50 |
| **Total** | 1000 |

| | |
|---|---|
| 1. DEH 82 - Dow Chemical Company, Bachtobelstrasse 3, CH-8810 Horgen, Switzerland. | |

**TABLE 3**

| **EXAMPLE No.** | **FIRE TEST** (minutes before average temp of the Steel I-Beam Reaches 550°C) | **EXPANSION** (final coating thickness/original coating thickness) |
|---|---|---|
| 1A | 60 | 30-40 |
| 1B | 62 | 30-40 |
| 2A COMPARATIVE | 13.17 | N/A |
| 2B COMPARATIVE | 23.0 | 30 |

As shown by the fire test and coating expansion results in TABLE 3, the inventive composition in Examples 1 A and 1 B provide coatings having superior insulation properties, especially when compared to uncoated steel I-Beam. The coatings provided by Examples 1 A and 1B meet the "one hour" fire test rating. Comparative Example 2 shows the value of an intumescent coating in prolonging the time to 550°C. Even assuming that the full scale furnace gives ratings that are 50% longer than lab scale furnace, an inventive coating provided by Examples 1A insulates steel for almost twice as long (60 min.) as a coating of the same thickness provided by Comparative Example 2B which lacks the blowing agent initiating at the first initiation temperature. The inventive coatings in Examples 1A and 1B also provide thicker and more uniform insulative foams upon exposure to fire than does the coating of Comparative Example 2B.

### Example 3a And Comparative Example 3b

Example 3A and Comparative Example 3B examine the difference in performance that inclusion of 5-Phenyl tetrazole makes. The formulations used in these Examples are shown in TABLE 4.

Steel I-Beams 0.3 meters in length, weighing 20 kg and having an Hp/A of 300 were coated with the powders shown in TABLE 4 to give the coated substrates to be tested. In Example 3A and Comparative Example 3B, the resulting coatings were smooth, semi gloss films, having a film thickness of 1.7 mm.

In Example 3A and in Comparative Example 3B, four of the coated I-Beam substrates were fire tested in a single lab scale furnace. After the fire test, the surface of the coatings in Examples 3A and 3B is uneven and is carbonised black. Cutting a section through the expanded film shows that there are various size foam cells, mostly between 5mm and 20 mm. Measuring the cross section height with a ruler gives an expansion factor (expanded burnt film thickness/original coated film thickness) of 40 times. Fire test and foamed coating thickness results for each of Example 3A and Comparative Example 3B are reported in TABLE 5, below.

**TABLE 4**

| | **Example 3A** | **Example 3B** |
|---|---|---|
| **Ingredient** | **Amount (wt. parts)** | |
| Type 7 Epoxy, partly esterified | 300 | 300 |
| 2- Methyl imidazole (2-MI) | 8.5 | 8.5 |
| Ammonium polyphosphate | 275 | 275 |
| Melamine phosphate | 125 | 125 |
| N-heterocyclic urea aldehyde resin | 117.0 | 121.5 |
| 5-Phenyl tetrazole | 4.5 | --- |
| Trimethylol Propane (TMP) | 50 | 50 |
| Zinc Borate | 20 | 20 |
| Titanium Dioxide | 50 | 50 |
| Mica (finely divided - 300 mesh) | 50 | 50 |
| **Total** | 1000 | 1000 |

**TABLE 5**

| **EXAMPLE No.** | **FIRE TEST** (minutes before average temp of the Steel I-Beam reaches 550°C) |
|---|---|
| 3A | 33 minutes |
| 3B | 28 minutes |

As shown by the fire test results in TABLE 5, the inventive coating in Example 3A provides a coating having superior insulation properties versus the coating in Comparative Example 3B which does not contain the blowing agent initiating at the first initiation temperature. As compared to the coating in Comparative Example 3B, the coating provided by Example 3A gives an increase in fire test time of 18%.

## Claims

1. An intumescent powder composition comprising:
one or more blowing agent initiating at the first initiation temperature;
one or more phosphorous containing catalyst;
one or more hydroxyl functional or epoxy functional thermosetting resin carbonific;
one or more heterocycle containing thermoplastic resin or (co)polymer carbonific; and,
one or more curing agent,
wherein the composition initiates blowing at a second initiation temperature, such that the first initiation temperature and the second initiation temperature differ from each other by 10°C or more and by up to 150°C.

2. The intumescent powder composition as claimed in claim 1, wherein the said one or more blowing agent initiating at the first initiation temperature a tetrazole of formula I, 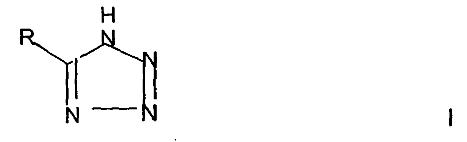 wherein R represents a monovalent organic radical chosen from C₃ to C₁₂ alkyl, aminoalkyl or diaminoalkyl, and C₆ to C₁₈ aryl, alkylaryl, aminoalkylaryl and diaminoalkylaryl.

3. The intumescent powder composition as claimed in claim 2, wherein the said tetrazole of formula I comprises 5-phenyl tetrazole.

4. The intumescent powder composition as claimed in claim 1, wherein the one or more phosphorous containing catalyst acts as a blowing agent at the second initiation temperature and comprises ammonium polyphosphate, melamine phosphate, urea phosphate, or mixtures thereof.

5. The intumescent powder composition as claimed in claim 1, further comprising one or more polyhydric alcohol carbonific.

6. The intumescent powder composition as claimed in claim 1, wherein the said one or more curing agent comprises one or more of an imidazole, an epoxy resin adduct of an imidazole, or an epoxy resin adduct of a polyamine.

7. The intumescent powder composition as claimed in claim 6, wherein the said curing agent comprises 2-methyl imidazole.

8. A plastic or molding composition comprising:
one or more moldable or shapeable (co)polymer or resin;
an intumescent composition of one or more phosphorous containing catalyst, one or more heterocycle containing thermoplastic resin or (co)polymer carbonific, and one or more blowing agent that initiates blowing at a first initiation temperature,
wherein the composition initiates blowing at a second initiation temperature such that the first initiation temperature and the second initiation temperature differ from each other by 10°C or more, and by up to 150°C.

9. A method of forming a coating from the composition as claimed in claim 1 comprising:
applying the said composition to a substrate to form a coating; and,
curing the said composition so that the said blowing agents are not activated during cure.

10. A coating made by the method as claimed in claim 9, wherein the said substrate comprises structural steel.
